## Europäisches Patentamt
## European Patent Office
## Office européen des brevets

(19)

(11) Numéro de publication: **0 235 011**
**B1**

(12) # FASCICULE DE BREVET EUROPEEN

(45) Date de publication du fascicule du brevet:
02.05.90

(51) Int. Cl.⁴: **F16D 69/02**, F16D 65/12

(21) Numéro de dépôt: 87400238.9

(22) Date de dépôt: 03.02.87

(54) Système à friction utilisant des matériaux composites réfractaires.

(30) Priorité: 05.02.86 FR 8601590

(43) Date de publication de la demande:
02.09.87 Bulletin 87/36

(45) Mention de la délivrance du brevet:
02.05.90 Bulletin 90/18

(84) Etats contractants désignés:
DE FR GB IT

(56) Documents cités:
FR-A- 2 151 133
GB-A- 2 034 835
GB-A- 2 151 729

(73) Titulaire: SOCIETE EUROPEENNE DE PROPULSION,
24 rue Salomon de Rothschild, F-92150 Suresnes(FR)

(72) Inventeur: Lacombe, Alain, 21 rue Jean de la Fontaine,
F-33600 Pessac(FR)

(74) Mandataire: Joly, Jean-Jacques, CABINET BEAU DE
LOMENIE 55, rue d'Amsterdam, F-75008 Paris(FR)

## Description

La présente invention concerne un système à friction comprenant au moins deux éléments associés en friction réalisés en des matériaux composites réfractaires.

Le domaine d'application de l'invention comprend les systèmes de freinage et les systèmes d'accouplement à friction, en particulier les freins pour aéronefs.

Dans ce dernier cas, les freins sont généralement des systèmes multidisques dans lesquels des disques fixes et des disques mobiles sont mis en contact afin de générer par frottement un effort retardateur. Les matériaux de frottement constituant les disques ou des patins de friction disposés sur les disques devraient posséder à la fois un ensemble de propriétés les rendant aptes à supporter les contraintes thermiques et mécaniques qui leur sont appliquées, un coefficient de frottement reproductible et stable dans le domaine et les différents conditions d'utilisation et un taux d'usure bien contrôlé.

Les matériaux composites réfractaires, et en particulier les matériaux composites carbone-carbone figurent parmi les matériaux de frottement récemment développés qui répondent le mieux aux critères ci-dessus.

Les composites carbone-carbone, qui présentent une chaleur spécifique très élevée, augmentant rapidement avec la température et ce jusqu'à plus de 2000 °C, et de fortes résistances thermomécaniques, aux chocs thermiques et à la fatigue, présentent de bonnes propriétés de frottement sur eux-mêmes. C'est ce qui a permis l'introduction avantageuse dans des systèmes multidisques de disques de frottement monoblocs élaborés entièrement en carbone-carbone.

Cependant, le coefficient de frottement des composites carbone-carbone sur eux-mêmes reste faible aux basses températures jusqu'aux environs de 100 °C. A cette température, le coefficient de frottement présente une discontinuité et atteint une valeur qu'il conserve en moyenne jusqu'à des températures très élevées de l'ordre de 1500 °C à 2000 °C, malgré des perturbations assez importantes. De plus, le coefficient de frottement des composites carbone-carbone sur eux-mêmes est sensible au milieu environnant, en particulier à l'action de l'humidité. Il faut noter aussi un coefficient de frottement statique faible qui, inférieur au coefficient de frottement dynamique, peut constituer une gêne dans les applications exigeant un maintien à l'arrêt.

D'autre part, bien que les composites carbone-carbone présentent dex taux d'usure volumique rapportée à l'énergie absorbée qui, comparés à ceux des matériaux conventionnels, soient relativement faibles dans une large plage de fonctionnement, l'oxydation constitue une cause d'augmentation sensible des taux d'usure à partir de 400 °C à 500 °C. L'effet de l'oxydation est d'autant plus prononcé que la température est élevée et le temps de séjour à cette température est important.

Il a été proposé dans le GB-A 2 151 729 d'utiliser en tant que matériau de friction un composite à renfort fibreux en carbone et à matrice mixte constituée de carbone et de carbure de silicium.

Des essais effectués par la demanderesse ont permis de vérifier que l'utilisation du carbure de silicium apporte, comme on pouvait s'y attendre, une bien meilleure résistance à l'usure par oxydation et ce jusqu'à plus de 1000 °C. Mais ces essais ont aussi montré que de tels composites à matrice mixte carbone/carbure de silicium conduisent, en frottement sur eux-mêmes, à des niveaux de frottement stables et reproductibles, sans discontinuité brutale, et présentent des coefficients de frottement statique au moins du même ordre que les coefficients de frottement dynamiques. Ces avantages, alliés à une très forte résistance mécanique thermique rendent ces matériaux particulièrement aptes à une utilisation en friction.

Toutefois, le carbure de silicium est bien connu pour ses propriétés abrasives et la limitation de l'usure par abrasion demande que les grains de carbure de silicium soient de tailles aussi faibles que possible. Le dépôt du carbure de silicium en phase vapeur permet effectivement d'obtenir des grains de petites tailles, mais il s'agit d'une technique onéreuse.

La présente invention a pour but de proposer un système à friction utilisant des matériaux composites réfractaires, ne présentant pas les inconvénients des composites carbone-carbone en frottement sur eux-mêmes tout en n'étant pas d'un coût trop élevé.

Ce but est atteint au moyen d'un système à friction comprenant au moins deux éléments associés en friction et dans lequel, conformément à l'invention, l'un des éléments de friction est en un matériau composite carbone-carbone, tandis que l'autre élément de friction est en un matériau composite constitué d'un renfort fibreux à base de fibres choisies parmi les fibres de carbone et les fibres de carbure de silicium et d'une matrice biphasée dont la phase principale est constituée par du carbure de silicium.

Le couplage en frottement d'un composite C-C (carbone-carbone) avec un composite à renfort C ou SiC et matrice principalement SiC s'est révélé comme permettant d'éviter les inconvénients majeurs des composites C-C en frottement sur eux-mêmes à un coût bien inférieur à ceux des couples formés par les composites SiC-SiC ou C-SiC en frottement sur eux-mêmes. De plus, et de façon tout à fait imprévue, le couplage réalisé conformément à l'invention n'entraîne pas d'usure beaucoup plus importante du carbone-carbone, comme on aurait pu s'y attendre en raison du caractère abrasif du carbure de silicium, et, de surcroît, le taux d'usure est pratiquement nul pour le composite dont la matrice contient du carbure de silicium, c'est-à-dire pour l'élément de friction le plus onéreux.

Dans le matériau composite réfractaire qui est couplé au composite C-C conformément à l'invention, le renfort est à base de fibres de carbone ou de carbure de silicium.

Quelle que soit la nature des fibres, le renfort peut se présenter sous la forme d'un empilage de mats aléatoires, de feutres, de tissus, de nappes de câbles ou autres formes textiles aiguilletées ou non, ou encore sous la forme d'une texture tridimensionnelle ou de toute autre construction aussi favorable pour la répartition spatiale du renforcement mécanique. Le renfort fibreux constitue ainsi un substrat poreux dont le pourcentage volumique de fibres peut varier de 10 à 40 % afin d'apporter les qualités de renfort mécanique requises tout en laissant une pososité accessible pour la densification par le matériau de la matrice.

L'essentiel de cette matrice est le carbure de silicium qui forme la phase principale.

Le reste de la matrice est constitué par une phase réfractaire secondaire qui a pour fonction d'accomoder les transferts de charges mécaniques entre fibres et phase principale de la matrice. Dans le cas d'un renfort en fibres de carbone, il est souhaitable que la phase secondaire participe en plus à la protection des fibres contre l'oxydation.

Parmi les matériaux susceptibles de constituer la phase secondaire se trouvent les carbures de titane, de zirconium, de tantale, ou de bore, le bore élémentaire, le nitrure de silicium, le nitrure de bore, et le pyrocarbone. On utilisera de préférence le pyrocarbone ou le nitrure de bore.

La mise en oeuvre du pyrocarbone par dépôt en phase vapeur est bien maîtrisée industriellement, et il permet une bonne accommodation mécanique entre les fibres et le carbure de silicium.

Le dépôt du nitrure de bore en phase vapeur est également maîtrisé. On obtient un dépôt homogène qui, en plus d'une bonne accommodation mécanique, présente une bonne résistance à l'oxydation jusqu'aux environs de 800 °C à 900 °C et offre une parfaite protection aux renforts carbonés.

En ce qui concerne le dépôt d'une phase intermédiaire de pyrocarbone ou de nitrure de bore, on pourra se référer à la demande de brevet français n° 2 567 874.

Le pourcentage volumique de la phase intermédiaire déposée peut varier de 5 à 25 %. Lorsque la phase intermédiaire est déposée, l'élaboration de la matrice est poursuivie par infiltration de la phase principale de carbure de silicium.

L'infiltration du carbure de silicium est, de façon en soi connue, réalisée par dépôt chimique en phase vapeur. On pourra se référer aux brevets français n° 2 401 888 et n° 2 520 352. Le pourcentage volumique de carbure de silicium dans le composite élaboré peut varier de 40 % à 80 %, afin que le pourcentage volumique des porosités subsistant dans le matériau reste inférieur à 10 %. Il est en effet avantageux que ce taux de porosité résiduelle soit le plus faible possible pour éviter la rétention des particules d'usure de nature abrasive et aussi limiter l'oxydation du renfort dans le cas où celui-ci est en fibres de carbone.

Conformément à l'invention, les matériaux composite à renfort fibreux C ou SiC et matrice principalement SiC, tels qu'ils viennent d'être décrits, sont utilisés en frottement sur des matériaux composites carbone-carbone.

Ces derniers sont bien connus dans des applications en frottement sur eux-mêmes de sorte qu'une description détaillée de leur structure et de leur mode d'élaboration n'est pas nécessaire. Le renfort en fibres de carbone peut se présenter sous forme d'un empilage de mats aléatoires, de feutres, de tissus, de nappes de câbles ou autres formes textiles aiguilletées ou non, ou encore sous la forme d'une texture tridimensionnelle. La matrice carbonée est infiltrée au sein du renfort fibreux de préférence par dépôt de pyrocarbone en phase vapeur.

Comme déjà indiqué, le couplage en frottement de matériaux composites à renfort C ou SiC et matrice principalement SiC avec des matériaux composites C-C permet d'éviter les inconvénients majeurs des matériaux composites C-C en frottement sur eux-mêmes. On peut citer notamment les performances suivantes de ces couples de frottement :

- excellente reproductibilité et stabilité du coefficient de frottement,
- quasi-insensibilité du frottement aux conditions environnantes et notamment l'humidité,
- conservation des caractéristiques de frottement jusqu'à des températures de plus de 1200 °C,
- faible tendance du coefficient de frottement à l'augmentation avec la pression spécifique,
- variation continue décroissante du coefficient de frottement d'environ 0,40 aux basses vitesses jusqu'à environ 0,30 au voisinage de 20 m/s, vitesse au-delà de laquelle le coefficient de frottement est pratiquement constant toutes choses égales par ailleurs,
- taux d'usure quasiment nul pour le composite réfractaire à matrice principalement SiC et taux d'usure voisin de $10.10^{-5}$ mm³/J pour le composite C-C dans la plage des températures de frottement inférieures à 500 °C.

Les caractéristiques ci-dessus énoncées permettent de réaliser des systèmes à friction tels que freins à disques et dispositifs d'embrayage ou d'accouplement à friction.

Dans des freins multidisques, les disques rotors peuvent être réalisés en composite C-C et les disques stator en composite réfractaire à matrice principalement SiC, ou inversement.

Des freins à disque peuvent être réalisés avec des patins d'étrier en composite C-C et un disque dont au moins les parties frottantes sont en composite réfractaire à matrice principalement SiC, ce qui permet d'éviter de façon intéressante l'usure du disque.

Des exemples de réalisation d'un système à friction conforme à l'invention seront maintenant décrits en référence aux dessins annexés sur lesquels :

- les figures 1 et 2 représentent un disque de frein (en vue partielle) et un étrier monoblocs,
- les figures 3 et 4 représentent des éléments de freins multidisques.

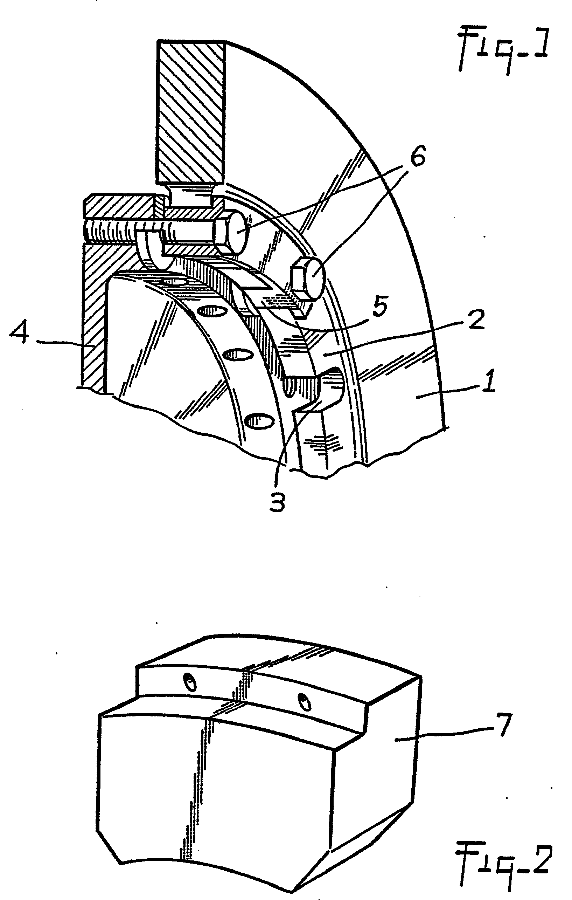

Sur la figure 1, le disque monobloc 1 est réalisé en composite réfractaire dont la constitution est la suivante :
- renfort tridimensionnel formé de feutres aiguilletés de fibres de carbone avec un taux volumique de fibres de 18 %,
- dépôt à coeur de pyrocarbone avec un taux volumique de 5 %, et
- infiltration de carbure de silicium avec un taux volumique de 69 %.

Le disque 1 comporte une couronne intérieure d;accrochage 2 à la périphérie intérieure de laquelle sont réparties des encoches 3 à fonds arrondis. Le disque est accroché au moyeu de la roue par l'intermédiaire d'un bol métallique 4 sur lesquel il est monté flottant axialement grâce à des cavaliers 5 logés dans les encoches 3, et des moyens de serrage 6.

Le disque 1 est associé en frottement à des patins d'étrier monoblocs 7 dont la forme générale est donnée par la figure 2. Les patins 7 sont réalisés en un matériau composite carbone-carbone constitué d'un renfort formé de feutres aiguilletés de fibres de carbone avec un taux volumique de fibres de 25 % infiltré par du pyrocarbone déposé en phase vapeur et de taux volumique 60 %.

L'usage d'un frein à disque de ce type se caractérise par une très grande reproductibilité des coups de frein, une excellente stabilité du couple de freinage pour un effort de serrage donné, une bonne efficacité du frein quelles que soient les conditions thermiques du frein et hygrométriques de l'environnement, une usure quasiment nulle (non mesurable) du disque, et une usure des patins de 1,5μm par coup de frein. La non-usure du disque constitue un attrait particulier de cette configuration puisqu'elle évite d'avoir à changer les disques comme dans des systèmes traditionnels.

A titre de comparaison, un ensemble disque et patins entièrement réalisé en carbone-carbone ne présente pas une reproductibilité et une progressivité aussi nettes des coups de frein. De plus, l'usure moyenne observée dans les mêmes conditions de fonctionnement est de 2 μm par coup de frein pour les patins et de 0,5 μm par face et par coup de frein pour le disque.

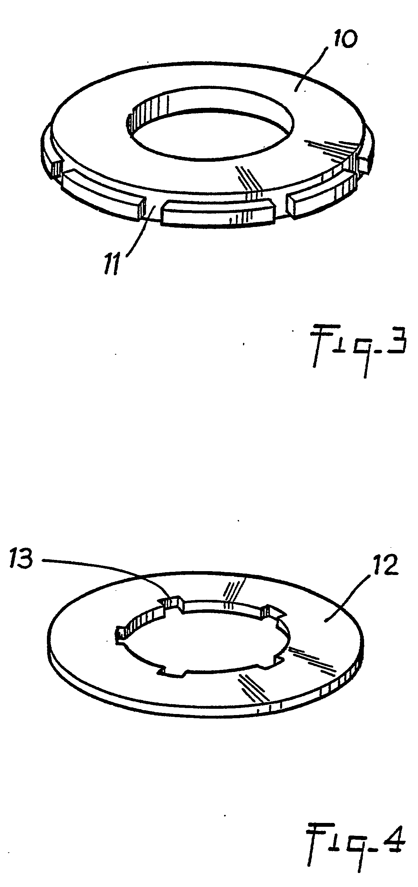

Les figures 3 et 4 montrent les éléments d'un frein multidisques pour aéronefs.

Les disques rotors monoblocs 10 sont réalisés en carbone-carbone et présentent des encoches d'accrochage 11 sur la périphérie extérieure.

Les disques stators monoblocs 12 sont élaborés en un composite dont la composition est la suivante :
- renfort bidirectionnel formé de strates de tissu de carbone avec un taux volumique de fibres de 28 %,
- phase intermédiaire de matrice en pyrocarbone infiltré par dépôt chimique en phase vapeur avec un taux volumique de 5 %, et
- phase principale de matrice en carbure de silicium infiltré par dépôt chimique en phase vapeur avec un taux volumique de 60 %.

L'accrochage des disques stators est réalisé au moyen d'encoches 13 formées sur leur périphérie intérieure.

L'usage d'un tel frein multidisques se caractérise par les mêmes qualités que pour le frein à disque et patins en ce qui concerne le frottement.

Le tableau ci-après qui fait partie de la présente description résume les caractéristiques de différents couples de matériaux associés en frottement, à savoir :
- carbone-carbone sur lui-même (C-C/C-C)
- composite à renfort en carbure de silicium et matrice à phase principale en carbure de silicium et phase secondaire de taux volumique compris entre 5 % et 25 %, en frottement sur lui-même (SiC-SiC/SiC-SiC)
- composite à renfort en carbone et matrice à phase principale en carbure de silicium et phase secondaire de taux volumique compris entre 5 % et 25 %, en frottement sur lui-même (C-SiC/C-SiC), et
- couple conforme à l'invention formé d'un composite carbone-carbone en frottement sur un composite à renfort en carbone et matrice à phase principale en carbure de silicium et phase secondaire de taux volumique compris entre 5 % et 25 % (C-C/C-SiC).

On notera que les valeurs figurant dans ce tableau sont des valeurs typiques résultant d'essais. Aussi, ces valeurs sont susceptibles de varier selon les conditions d'essais et sont données ici essentiellement pour permettre de classer les couples de frottement.

| Couples de matériaux frottants | | | C–C/C–C | SiC–SiC/SiC–SiC % phase secondaire 5% à 25% | C–SiC/C–SiC % phase secondaire 5% à 25% | C–C/C–SiC % phase secondaire 5% à 25% |
|---|---|---|---|---|---|---|
| Coefficient relatif de frottement statique* | | | 1 | 4 à 5 | 4 à 5 | 2 à 4 |
| Coefficient relatif moyen de frottement dynamique* | 20°C | | 1 | 4,3 | 4 | 2 |
| | 100°C | sec | 1 | 2,2 | 2 | 1 |
| | | humide | 1 | 3 | 2,75 | 1,4 |
| | 500°C | | 1 | 1,5 | 1,5 | 0,55 |
| | 1000°C | | 1 | – | 1,25 | 0,5 |
| Taux d'usure relatif moyen à 200°C en température de masse sous un flux <100 W/cm$^2$* | | | 1/1 | 0,5/0,5 | 0,5/0,5 | 1,2/0 |

\* Toutes les valeurs mentionnées dans le tableau ci-dessus sont exprimées en valeurs relatives par rapport au couple C–C/C–C pris comme référence.

## Revendications

1. Système à friction comprenant au moins deux éléments associés en friction réalisés en des matériaux composites réfractaires, caractérisé en ce que l'un des éléments de friction est en un matériau composite carbone-carbone tandis que le deuxième élément de friction est en un matériau composite constitué d'un renfort fibreux à base de fibres choisies parmi les fibres de carbone et les fibres de carbure de silicium et d'une matrice biphasée dont la phase principale est constituée par du carbure de silicium.

2. Système à friction selon la revendication 1, caractérisé en ce que la matrice du matériau composite réfractaire constitutif du deuxième élément de friction comprend une phase secondaire intermédiaire en un matériau choisi parmi le pyrocarbone et le nitrure de bore.

3. Système à friction selon la revendication 2, caractérisé en ce que la phase secondaire intermédiaire de la matrice occupe entre 5 % et 25 % du volume du matériau composite réfractaire.

4. Système à friction selon l'une quelconque des revendications 1 à 3, caractérisé en ce que la phase principale en carbure de silicium de la matrice biphasée est élaborée par infiltration chimique en phase vapeur.

5. Système à friction selon l'une quelconque des revendications 1 à 4, caractérisé en ce que dans le matériau composite réfractaire constitutif du deuxième élément de friction, le renfort fibreux occupe entre 10 % et 40 % du volume et la phase principale en carbure de silicium de la matrice occupe entre 40 % et 80 % du volume.

6. Système à friction selon l'une quelconque des revendications 1 à 5 constituant un frein à disque et patins, caractérisé en ce que le disque de frein constitue le deuxième élément de friction et coopère avec des patins en composite carbone-carbone.

7. Système à friction selon l'une quelconque des revendications 1 à 5, constituant un frein multidisques, caractérisé en ce qu'il comprend des disques rotors (10) qui constituent les premiers éléments de friction en composite carbone-carbone et coopèrent avec des disques stators (12) qui constituent les deuxièmes éléments de friction.

## Patentansprüche

1. Reibungssystem mit wenigstens zwei zur Reibung zusammengesetzten Elementen, gebildet aus feuerfesten Verbundmaterialien, dadurch gekennzeichnet, daß eines der Reibungselemente aus einem Verbundmaterial Kohlenstoff-Kohlenstoff gebildet ist, während das zweite Reibungselement aus einem Verbundmaterial ist, das aus einer Faserverstärkung auf der Basis von Fasern, die aus den Carbonfasern und den Fasern des Siliziumkarbids gewählt sind, und aus einer doppelphasigen Matrix gebildet ist, von der die Hauptphase aus einem Siliziumkarbid gebildet ist.

2. Reibungssystem nach Anspruch 1, dadurch gekennzeichnet, daß die Matrix des feuerfesten Verbundmaterials, das das zweite Reibungselement bildet, eine zweite Zwischenphase aus einem Material aufweist, das aus dem Pyrokohlenstoff und dem Bornitrit gewählt ist.

3. Reibungssystem nach Anspruch 2, dadurch gekennzeichnet, daß die zweite Zwischenphase der Matrix zwischen 5% und 25% des Volumens des feuerfesten Verbundmaterials besetzt.

EP 0 235 011 B1

4. Reibungssystem nach einem der Ansprüche 1 bis 3, dadurch gekennzeichnet, daß die Hauptphase aus Siliziumkarbid der zweiphasigen Matrix ausgearbeitet ist durch chemische Infiltration in Dampfphase.

5. Reibungssystem nach einem der Ansprüche 1 bis 4, dadurch gekennzeichnet, daß in dem feuerfesten Verbundmaterial, das das zweite Reibungselement bildet, die Faserverstärkung zwischen 10% und 40% des Volumens besetzt und die Hauptphase aus Siliziumkarbid der Matrix zwischen 40% und 80% des Volumens besetzt.

6. Reibungssystem nach einem der Ansprüche 1 bis 5, das eine Scheiben- und Klotzbremse bildet, dadurch gekennzeichnet, daß die Scheibenbremse das zweite Reibungselement bildet und mit Klötzen aus Verbundwerkstoff Kohlenstoff-Kohlenstoff zusammenwirkt.

7. Reibungssystem nach einem der Ansprüche 1 bis 5, das eine Mehrscheibenbremse bildet, dadurch gekennzeichnet, daß es Rotorscheiben (10) aufweist, die die ersten Reibungselemente aus Verbundwerkstoff Kohlenstoff-Kohlenstoff bilden, und mit Statorscheiben (12) zusammenwirken, die die zweiten Reibungselemente bilden.

## Claims

1. Friction system comprising at least two frictionally coupled elements produced in refractory composite materials, characterized in that one of the friction elements is made of a carbon-carbon composite material whereas the second friction element is made of a composite material constituted of a fibrous reinforcement in which the fibers are selected from carbon fibers and silicon carbide fibers, and of a two-phased matrix of which the principal phase is constituted by silicon carbide.

2. Friction system according to claim 1, characterized in that the matrix of the refractory composite material constituting the second friction element comprises an intermediate secondary phase in a material selected from pyrocarbon and boron nitride.

3. Friction system according to claim 2, characterized in that the intermediate secondary phase occupies between 5% and 25% of the volume of the refractory composite material.

4. Friction system according to any one of claims 1 to 3, characterized in that the principal phase in silicon carbide of the two-phased matrix is produced by chemical vapor infiltration.

5. Friction system according to any one of claims 1 to 4, characterized in that in the refractory composite material constituting the second friction element, the fibrous reinforcement occupies between 10% and 40% of the volume and the principal phase in silicon carbide of the matrix occupies between 40% and 80% of the volume.

6. Friction system according to any one of claims 1 to 5, constituting a brake with discs and pads, characterized in that the brake disc constitutes the second friction element and cooperates with pads in carbon-carbon composite.

7. Friction system according to any one of claims 1 to 5, constituting a multidisc brake, characterized in that it comprises rotor discs (10) which constitute the first friction elements in carbon-carbon composite and cooperate with stator discs (12) which constitute the second friction elements.

Fig-1

Fig-2

Fig-3

Fig-4